# EUROPÄISCHE PATENTANMELDUNG

(11) **EP 1 396 619 A1**
(43) Veröffentlichungstag der Anmeldung: **10.03.2004**
(21) Anmeldenummer: 02020006.9
(22) Anmeldetag: 05.09.2002
(51) Int. Cl.: F02B 37/18, F02B 37/013, F02B 37/24, F01N 3/20

(54) **Aufladesystem für eine Brennkraftmaschine**

(71) Anmelder: BorgWarner Inc., Troy, Michigan 48084 (US)
(72) Erfinder: Hoecker, Patric, 76829 Landau (DE)
(74) Vertreter: Patentanwälte Westphal, Mussgnug & Partner

(57) **Zusammenfassung**

Die Erfindung betrifft ein Aufladesystem für eine Brennkraftmaschine (1) mit mindestens einer abgasseitig angeordneten Turbine (13) und mit mindestens einem ladeluftseitig angeordneten Verdichter (14), die jeweils über eine gemeinsame Welle (15) gekoppelt sind, mit mindestens einem ersten Katalysator (30), der abgasseitig der Turbine (13) in Reihe nachgeschaltet vorgesehen ist, mit einer Vorrichtung zum schnellen Aufheizen des ersten Katalysators (30) bei niedrigen Temperaturen der Brennkraftmaschine (1), die eine parallel zu mindestens einer Turbine (13) angeordnete Rohrleitung (33) zur Überbrückung der jeweiligen Turbine (13) aufweist und die eine Schaltvorrichtung (42) aufweist, die abgasseitig der parallelen Anordnung aus Rohrleitung und Turbine (13) in Reihe vorgeschaltet vorgesehen ist und über die einstellbar ist, welche Teilmenge des Abgases jeweils über die Turbine (13) und welche Teilmenge jeweils über die Rohrleitung (33) dem ersten Katalysator (30) direkt zugeführt wird. Die Erfindung betrifft ferner eine Brennkraftmaschine (1) mit einem solchen Aufladesystem.

## Beschreibung

Die Erfindung betrifft ein Aufladesystem für eine Brennkraftmaschine und eine Brennkraftmaschine mit einem solchen Aufladesystem.

Ein solches Aufladesystem ist beispielsweise ein Abgasturbolader, der einstufig, zwei- oder mehrstufig ausgebildet sein kann. Eine jeweilige Stufe des Abgasturboladers besteht aus einem Verdichter, der ladeluftseitig dem Einlass des Motors vorgeschaltet ist und einer Turbine, die dem abgasseitigen Motorauslass nachgeschaltet ist. Turbine und Verdichter sind miteinander über eine gemeinsame Welle gekoppelt.

Bei einem einstufig ausgebildeten Abgasturbolader wird der Abgasstrom über die Turbine des Abgasturboladers zum Katalysator geleitet. Problematisch an einer derartigen Abgasführung ist, dass der nachgeschaltete Katalysator eine bestimmte Zeitdauer benötigt, bis er die vorbestimmte Betriebstemperatur erreicht hat. Bis die Betriebstemperatur des Katalysators erreicht wird, ist jedoch die Konvertierungsrate und damit auch der Wirkungsgrad des Katalysators relativ gering. Dieses Problem wirkt sich besonders stark aus, wenn die Abgasrohrleitung bis zum nachgeschalteten Katalysator besonders lang ist.

Moderne turboaufgeladene Brennkraftmaschinen können mit einer zweistufigen Aufladung ausgestattet sein. Ein zweistufiger Turbolader weist eine Niederdruckstufe sowie eine Hochdruckstufe, die jeweils einen Verdichter und eine Turbine aufweisen. Das Abgas gelangt hier über die Hochdruckturbine und der nachgeschaltet angeordneten Niederdruckturbine zum Katalysator. Eine Brennkraftmaschine mit einem solchen zweistufigen Aufladesystem ist beispielsweise in den deutschen Offenlegungsschriften DE 198 37 978 A1 und DE 195 14 572 A1 ausführlich beschrieben, so dass auf deren Aufbau und Funktionsweise nicht näher eingegangen wird.

Bei einem zweistufig ausgebildeten Turbolader ist das Problem der schnellen Aufheizung des Katalysators auf die Betriebstemperatur noch gravierender, da der heiße Abgasstrom beim Durchlaufen durch die beiden Stufen des Turboladers stärker abgekühlt wird, so dass der nachgeschaltete Katalysator deutlich langsamer auf die Betriebtemperatur aufgeheizt wird als bei einem einstufigen Turbolader. Die Konvertierungsrate des Katalysators ist während dieser Zeitdauer nicht ausreichend.

Die deutsche Offenlegungsschrift DE 198 33 619 A1 beschreibt eine einstufig ausgebildete, turboaufgeladene Brennkraftmaschine, bei der die Zeit verkürzt werden soll, bis zu der der Hauptkatalysator seine Betriebstemperatur erreicht hat. Zu diesem Zweck ist in der DE 198 33 619 A1 eine Bypassleitung zur Überbrückung der Turbine des Turboladers vorgesehen. In diese Bypassleitung kann fakultativ auch ein Startkatalysator angeordnet sein. Das Abgas strömt hier entweder über die Bypassleitung oder über die Turbine, wobei die Umschaltung zwischen Bypassbetrieb und Normalbetrieb mittels eines Schiebers erfolgt.

Problematisch an der in der DE 198 33 619 A1 beschriebenen Anordnung ist, dass lediglich eine "digitale" Umschaltung zwischen Bypassbetrieb und Normalbetrieb möglich ist, das heißt, der Abgasstrom fließt entweder über die Bypassleitung oder über die Turbine. Auch ist das separate Bereitstellen einer eigens vorgesehenen Bypassrohrleitung aufgrund des dafür erforderlichen zusätzlichen Montageschrittes relativ aufwendig und damit teuer. Schließlich besteht auch hier das Problem, dass die Rohrleitung bis zum Katalysator durch diese Maßnahme typischerweise sehr lang ist, was einerseits aufgrund der dafür erforderlichen Rohrleitung relativ kostenintensiv ist und wodurch andererseits den Abgasstrom vorzeitig abkühlt.

Ausgehend von diesem Stand der Technik liegt der vorliegenden Erfindung die Aufgabe zugrunde, eine konstruktiv verbesserte turboaufgeladene Brennkraftmaschine mit einem Katalysator bereitzustellen, bei der der Katalysator insbesondere in der Startphase einen verbesserten Wirkungsgrad aufweist.

Erfindungsgemäß wird diese Aufgabe durch ein Aufladesystem mit den Merkmalen des Patentanspruchs 1 gelöst. Demgemäß ist ein Aufladesystem für eine Brennkraftmaschine vorgesehen,
- mit mindestens einer abgasseitig angeordneten Turbine und mit mindestens einem ladeluftseitig angeordneten Verdichter, die jeweils über eine gemeinsame Welle gekoppelt sind,
- mit mindestens einem ersten Katalysator, der abgasseitig der Turbine in Reihe nachgeschaltet vorgesehen ist,
- mit einer Vorrichtung zum schnellen Aufheizen des Katalysators bei niedrigen Temperaturen der Brennkraftmaschine,
- die eine parallel zu mindestens einer Turbine angeordnete Rohrleitung zur Überbrückung der jeweiligen Turbine aufweist und
- die eine Schaltvorrichtung aufweist, die abgasseitig der parallelen Anordnung aus Rohrleitung und Turbine in Reihe vorgeschaltet vorgesehen ist und über die einstellbar ist, welche Teilmenge des Abgases jeweils über die Turbine und welche Teilmenge jeweils über die Rohrleitung dem ersten Katalysator direkt zugeführt wird.

Die Aufgabe wird ferner durch eine Brennkraftmaschine mit den Merkmalen des Patentanspruchs 15 gelöst. Demgemäß ist eine Brennkraftmaschine vorgesehen,
- mit einem Motorblock, der mindestens einen Zylinder aufweist, mit einem Ladelufteinlass und einem Abgasauslass,
- mit einem Aufladesystem, dessen Turbinen dem Abgasauslass nachgeschaltet angeordnet sind und dessen Verdichter dem Ladelufteinlass vorgeschaltet angeordnet sind.

Der vorliegenden Erfindung liegt die Idee zugrunde, eine Umschalteinrichtung vorzusehen, mittels der zumindest ein Teil des Abgases an der Turbine vorbeigeleitet wird, wobei die Turbine für diesen Fall verschlossen oder zumindest zum Teil verschlossen ist. Im Falle einer verschlossenen Turbine wird das Abgas an der Turbine vorbeigeleitet und direkt in den Katalysator eingeleitet und zwar solange, bis der Katalysator seine Betriebstemperatur erreicht hat. Dadurch bedingt verkürzt sich die Zeit bis zum Erreichen der Betriebstemperatur des Katalysators. Somit erhöht sich die Konvertierungsrate und damit auch der Wirkungsgrad des Katalysators.

Der Schaltmechanismus zum Verschließen der Turbine sowie mindestens eines Teils des die Turbine überbrückenden Rohrleitungsabschnitts ist erfindungsgemäß im Gehäuse der Turbine bzw. des Turboladers mitintegriert. Der Schaltmechanismus erfolgt hier pneumatisch, hydraulisch, mechanisch oder elektrisch gesteuert. Die Steuerung dieses Schaltmechanismus erfolgt durch eine Steuereinrichtung, die beispielsweise Bestandteil der Motorsteuerung sein kann oder die alternativ auch als separater Mikrocontroller oder Mikroprozessor ausgeführt sein kann:

Vorteilhafte Ausgestaltungen und Weiterbildungen der Erfindung sind den Unteransprüchen sowie der Beschreibung unter Bezugnahme auf die Zeichnung entnehmbar.

Die Erfindung wird nachfolgend anhand der in den Figuren der Zeichnung angegebenen Ausführungsbeispiele näher erläutert. Es zeigt dabei:
- Figur 1: ein erstes Ausführungsbeispiel einer erfindungsgemäßen, einstufig aufgeladenen Brennkraftmaschine mit einer Bypasseinrichtung;
- Figur 2: ein zweites Ausführungsbeispiel einer erfindungsgemäßen, einstufig aufgeladenen Brennkraftmaschine entsprechend Figur 1 mit variabler Turbinengeometrie;
- Figur 3: ein drittes Ausführungsbeispiel einer erfindungsgemäßen, einstufig aufgeladenen Brennkraftmaschine entsprechend Figur 1 mit Vorkatalysator in der Bypassleitung;
- Figur 4: ein viertes Ausführungsbeispiel einer erfindungsgemäßen Brennkraftmaschine mit einem zweistufigen Turbolader;
- Figur 5: ein fünftes, besonders bevorzugtes Ausführungsbeispiel einer erfindungsgemäßen, zweistufig aufgeladenen Brennkraftmaschine.

In allen Figuren der Zeichnung sind gleiche bzw. funktionsgleiche Elemente - sofern nichts anderes angegeben ist - mit gleichen Bezugszeichen versehen worden. In allen Figuren der Zeichnung wurde-ferner die Richtungen des Abgasstromes sowie des Ladeluftstromes jeweils durch Pfeile in den entsprechenden Rohrleitungen bezeichnet.

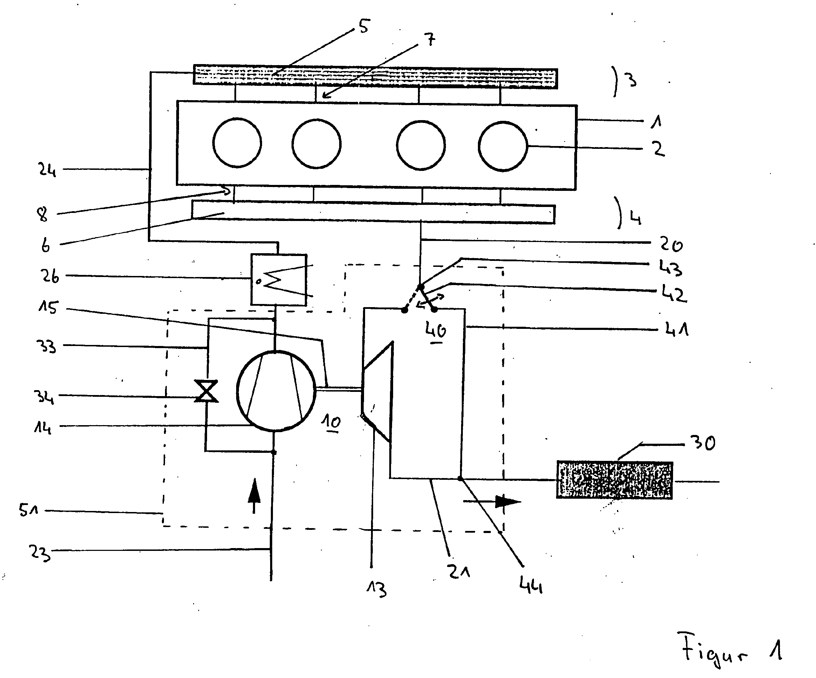

Figur 1 zeigt in einer schematischen Darstellung ein erstes Ausführungsbeispiel einer erfindungsgemäßen Brennkraftmaschine.

In Figur 1 ist mit Bezugszeichen 1 eine Brennkraftmaschine bezeichnet. Die Brennkraftmaschine 1 ist im vorliegenden Ausführungsbeispiel als vierzylindrige Brennkraftmaschine in Reihenbauweise ausgebildet und weist somit vier in Reihe zueinander angeordnete Zylinder 2 auf. Die Brennkraftmaschine 1 weist eine Frischluftseite 3 und eine Abgasseite 4 auf, wobei die Einlässe 7 auf der Frischluftseite 3 mit einer Ladeluftsammelleitung 5 und die Auslässe 8 der Brennkraftmaschine 1 auf der Abgasseite 4 mit zwei Abgassammelleitungen 6 verbunden sind.

Die Brennkraftmaschine 1 wird über einen mit Bezugszeichen 10 bezeichneten Turbolader aufgeladen. Der Turbolader 10 ist im vorliegenden Ausführungsbeispiel einstufig ausgebildet und weist somit eine Turbine 13 und einen Verdichter 14, die über eine gemeinsame Welle 15 miteinander gekoppelt sind, auf. Die Abgassammelleitung 6 ist stromaufwärts mit Abgasleitungen 20, 21 verbunden, über die das Abgas aus den Zylindern 2 der Brennkraftmaschine 1 abgeleitet werden kann. In gleicher Weise sind Ladeluftleitungen 23, 24 vorgesehen, die stromaufwärts mit der Ladeluftsammelleitung 5 verbunden sind. Über die Ladeluftleitungen 23, 24 und den Verdichter 14 ist den Zylindern 2 der Brennkraftmaschine 1 Ladeluft zuführbar.

Ferner ist ein Ladeluftkühler 26 vorgesehen, der in der Ladeluftleitung 24 zwischen dem Verdichter 14 und den Einlässen 7 der Brennkraftmaschine 1 angeordnet ist.

Ferner ist eine Rohrleitung 33 vorgesehen, die parallel zum Verdichter 14 geschaltet angeordnet ist. Diese Rohrleitung 33 zweigt somit vor dem Einlass des Verdichters 14 aus der Ladeluftleitung 23 ab und mündet hinter dem Verdichter 14 in die Ladeluftleitung 24 ein. In der Rohrleitung 33 ist ferner ein Bypassventil 34 angeordnet. Die Rohrleitung 33 mit dem darin enthaltenen Bypassventil 34 bzw. dem Rohrschalter 34 überbrückt somit den Verdichter 14. Das Bypassventil 34 kann beispielsweise elektrisch, pneumatisch oder hydraulisch gesteuert oder geregelt werden.

Erfindungsgemäß ist eine abgasseitige Bypasseinrichtung 40 vorgesehen. Die Bypasseinrichtung 40 umfasst einen Rohrleitungsabschnitt 41, der parallel zu der Turbine 13 geschaltet angeordnet ist. Der Rohrleitungsabschnitt 41 zweigt somit von der Abgasleitung 20 vor dem Turbinenrad 13 ab und mündet hinter der Turbine 13 wieder in die Abgasleitung 21 ein.

Die Bypasseinrichtung 40 enthält ferner eine Umschalteinrichtung 42, die in einem Abzweigpunkt 43 vor dem Turbinenrad 13 in der Abgasleitung 20 angeordnet ist. In einer alternativen Ausgestaltung könnte diese Umschalteinrichtung 42 zusätzlich oder alternativ auch in dem Bereich der Einmündung 44 vorgesehen sein, wenngleich diese Anordnung nicht so vorteilhaft ist wie die eben beschriebene Anordnung vor der Turbine 13. Die Umschalteinrichtung 42 kann ebenfalls steuerbar oder regelbar ausgebildet sein. Der besondere Vorteil dieser Umschalteinrichtung 42 besteht darin, dass sowohl zwischen einer Position, bei der das Abgas vollständig über die Abgasleitung 20 strömt und einer Position, bei der das Abgas vollständig über den Rohrleitungsabschnitt 41 strömt, hin- und hergeschaltet werden kann. Neben dieser quasi "digitalen" Umschaltmöglichkeit besteht in einer sehr vorteilhaften Betriebsweise auch die Möglichkeit, lediglich ein Teil des Abgases über die Abgasleitung 20 strömen zu lassen, während der restliche Teil des Abgases über den Rohrleitungsabschnitt 41 strömt. Damit ist gewissermaßen ein stufenloses Schalten des-Abgasstromes möglich, wodurch stufenlos und damit gezielt eine gewisse Abgasmenge über die beiden Rohrleitungen 20, 21, 41 verteilt werden kann. Damit ist mithin eine an den jeweiligen Betriebszustand der Brennkraftmaschine 1 und des Turboladers 10 angepasste und optimierte Abgasverteilung in den Abgasleitungen 20, 21, 41 einstellbar.

Die Umschalteinrichtung 42 kann je nach gewünschter Funktionalität als Rohrschalter, als Regelventil, als Weiche mit Absperrschalter, als Schieber oder dergleichen ausgebildet sein. In der Abgasleitung 21 ist ein Katalysator 30 angeordnet. Mittels der erfindungsgemäßen Bypasseinrichtung 40 ergibt sich eine verbesserte Einflussmöglichkeit zur Verbesserung des Anspringverhaltens des Katalysators 30. Durch Umgehung der als Wärmesenke fungierenden Turbinen 13 des Abgasturboladers kann der gesamte Abgasmassenstrom über die Leitung 41 direkt zum Katalysator 30 geleitet werden. Dadurch ist ein schnelleres Anspringen des Katalysators 30 und somit eine erhöhte Konvertierungsrate in den ersten Sekunden des Abgastestes möglich.

Die Umschalteinrichtung 42 und/oder das Bypassventil 34 können über eine in Figur 1 nicht dargestellte Regel- oder Steuereinrichtung regelbar oder steuerbar ausgebildet sein.

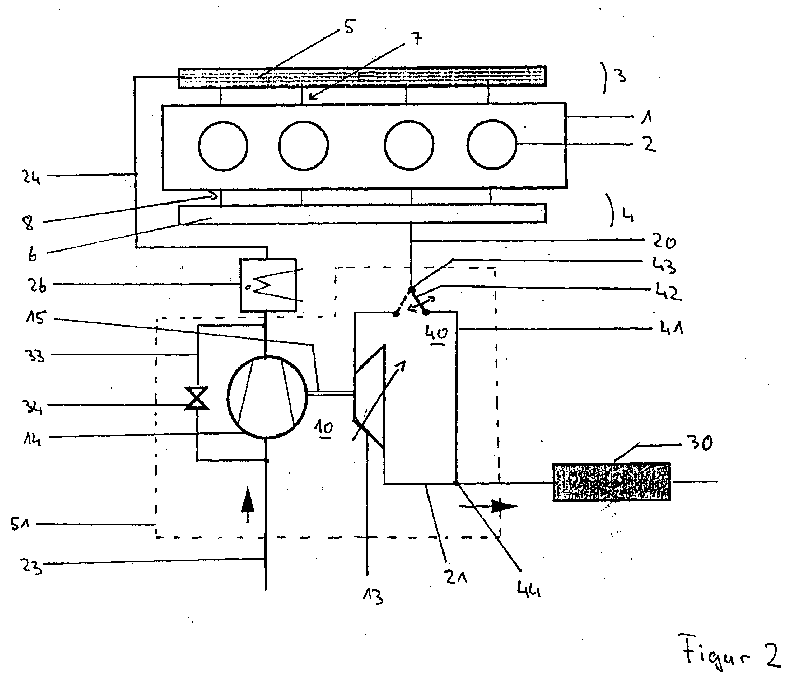

Im Unterschied zu der Anordnung in Figur 1 weist die turboaufgeladene Kraftmaschine 1 gemäß Figur 2 einen Turbolader 10 mit variabler Turbinengeometrie (VTG) auf. Die Funktionalität einer solchen variablen Turbinengeometrie ist in allen Figuren mit einem Pfeil angedeutet.

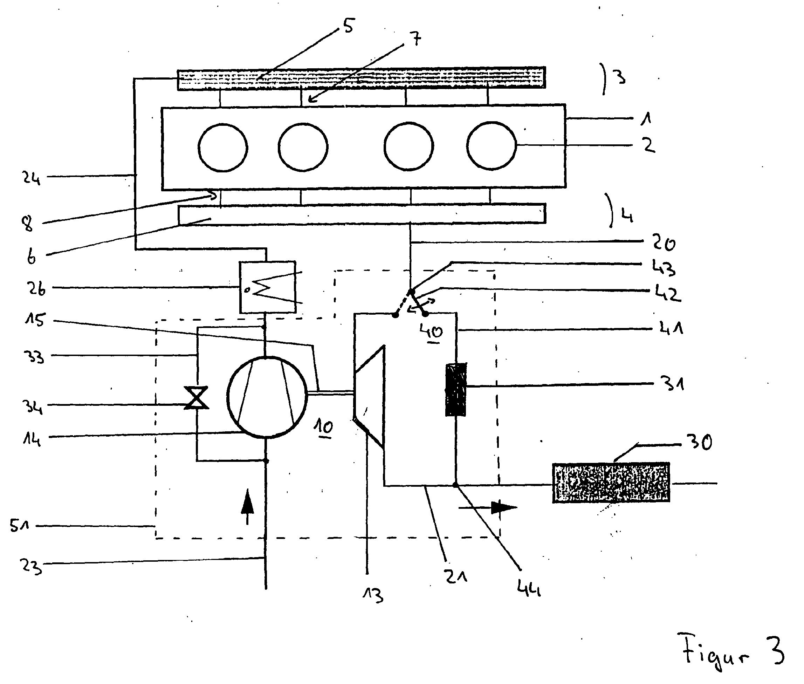

Im Unterschied zu der Anordnung in Figur 1 weist die turboaufgeladene Brennkraftmaschine gemäß Figur 3 einen motornahen Vorkatalysator 31 auf. Dieser Vorkatalysator 31 ist in dem Rohrleitungsabschnitt 41 der Bypasseinrichtung 40 angeordnet. Motornah bedeutet in diesem Zusammenhang, dass der vom Motor der Brennkraftmaschine 1 kommende, sehr heiße Abgasstrom zum Vorkatalysator 31 eine geringere Wegstrecke durch die Abgasleitung 20 durchströmen muss, als bis zum Hauptkatalysator 30. Durch das Bereitstellen eines Vorkatalysators 31 wird eine weitere Verbesserung bezüglich des Anspringverhaltens und der Konvertierungsrate in den ersten Sekunden des Abgastests erzielt. Typischerweise ist dieser Vorkatalysator 31 sehr viel kleiner dimensioniert als der Hauptkatalysator 30 mit der Folge, dass dieser aufgrund seiner geringeren Größe und insbesondere aufgrund seiner Motornähe sehr viel schneller aufgewärmt wird als der Hauptkatalysator 30. Dadurch bedingt erreicht die Konvertierungsrate im Vergleich zu einer Anordnung ohne Vorkatalysator 31 bereits sehr viel früher annehmbare Konvertierungswerte, da bei einem warmen Katalysator das Abgas besser gereinigt wird als bei einem kalten.

Der Vorkatalysator 31 bleibt so lange zugeschaltet, bis auch der Hauptkatalysator 30 seine Betriebstemperatur erreicht hat. Dann wird die Umschalteinrichtung 42 digital oder stufenlos umgeschaltet, so dass der gesamte Abgasstrom oder zumindest ein Teil des Abgasstromes über die Abgasleitung 20 und die Turbine 13 strömen kann. Im Normalbetrieb, d.h. bei voll aufgeheiztem Hauptkatalysator 30, ist der Vorkatalysator 31 typischerweise überbrückt bzw. weggeschaltet. In einer alternativen Ausgestaltung kann der Vorkatalysator 31 auch in dem vor dem Abzweigpunkt 43 angeordneten Bereich der Abgasleitung 20 oder auch in einem Bereich der Abgasleitung 21, der zwischen der Einmündung 44 und dem Hauptkatalysator 30 angeordnet ist, vorgesehen sein. Jedoch ist eine solche Anordnung des Vorkatalysators 31 weniger vorteilhaft, da hier die Möglichkeit des Wegschaltens nicht mehr gegeben ist.

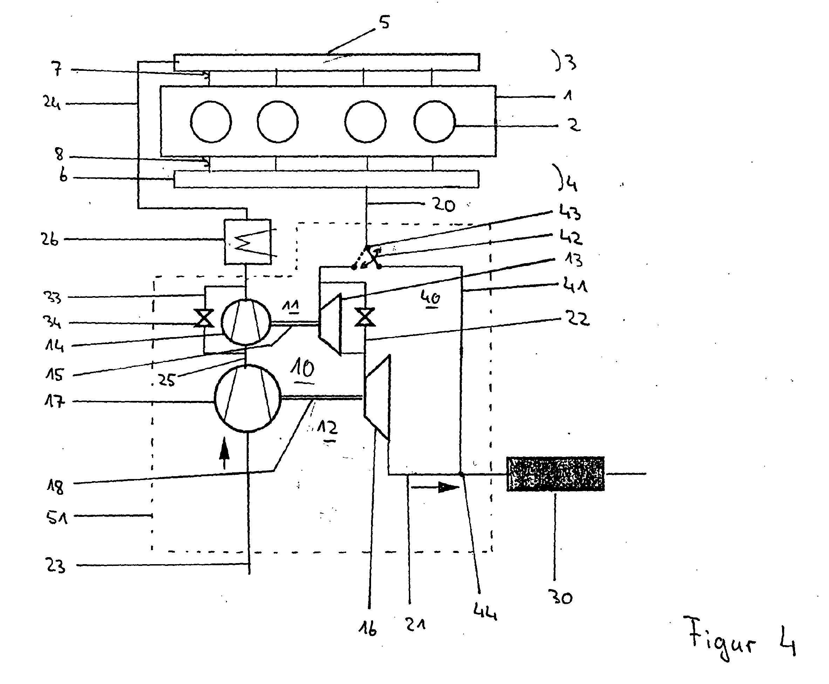

Im Unterschied zu Figur 1 weist die Anordnung gemäß Figur 4 einen zweistufig ausgebildeten Turbolader 10 auf. Ein solcher zweistufiger Turbolader 10 weist eine Hochdruckstufe 11 und eine Niederdruckstufe 12 auf. Die Hochdruckstufe 11 besteht aus einer Hochdruckturbine 13 und einem Hochdruckverdichter 14, die über eine gemeinsame Welle 15 miteinander starr gekoppelt sind. In gleicher Weise weist die Niederdruckstufe 12 miteinander durch eine gemeinsame Welle 18 gekoppelte Niederdruckturbine 16 und Niederdruckverdichter 17 auf. Die Hochdruckstufe 11 ist der Niederdruckstufe 12 abgasseitig vorgeschaltet.

Durch das Bereitstellen eines zweistufig ausgebildeten Turboladers 10 lässt sich eine Erhöhung des Drehmomentes und damit einhergehend der Nennleistung der Brennkraftmaschine 1 erzielen.

Der Turbinenlaufraddurchmesser der Niederdruckturbine 16 ist im vorliegenden Ausführungsbeispiel größer als der der Hochdruckturbine 13, wobei das Laufraddurchmesserverhältnis zwischen Niederdruck- und Hochdruckturbine typischerweise, jedoch nicht notwendigerweise, im Bereich 1,2 bis 1,8 liegt. In gleicher Weise weist das Verdichterrad des Hochdruckverdichters 14 einen geringeren Durchmesser als das Verdichterrad des Niederdruckverdichters 17 auf.

Die beiden Turbinen 13, 16 sind zueinander in Reihe geschaltet angeordnet, wobei die Hochdruckturbine 13 mit der Niederdruckturbine 16 über die Abgasleitung 22 verbunden ist und der Niederdruckturbinen 16 in Strömungsrichtung des Abgases vorgeschaltet angeordnet ist. In gleicher Weise sind der Niederdruckverdichter 17 und der Hochdruckverdichter 14 in Reihe zueinander angeordnet und über eine Ladeluftleitung 25 miteinander verbunden, wobei der Niederdruckverdichter 17 in Strömungsrichtung der Ladeluft dem Hochdruckverdichter 14 vorgeschaltet angeordnet ist.

Im Bedarfsfall kann zusätzlich zu dem Ladeluftkühler 26 ein weiterer Ladeluftkühler vorgesehen sein, der beispielsweise in der Ladeluftleitung 25 angeordnet ist.

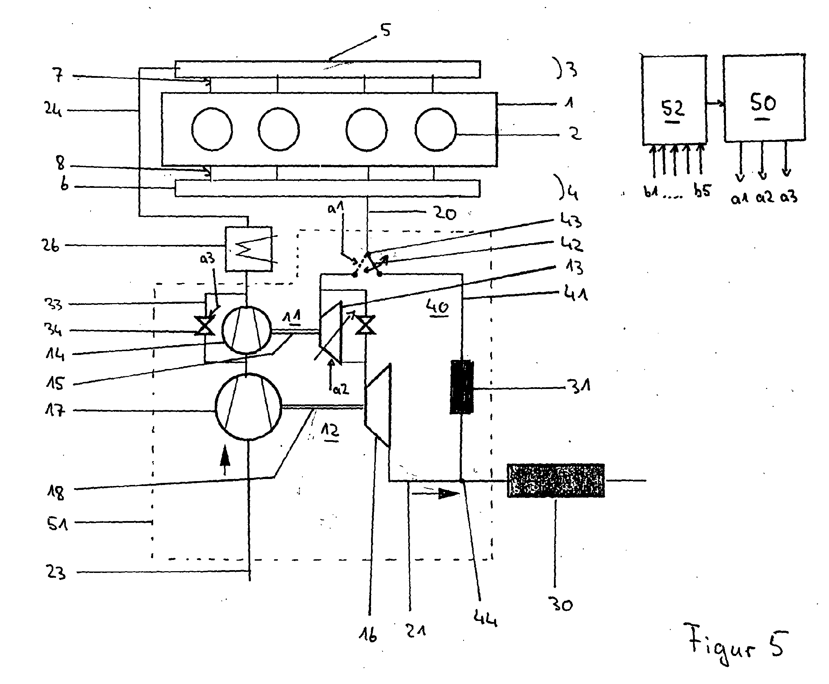

Figur 5 zeigt in einer schematischen Darstellung ein fünftes, besonders bevorzugtes Ausführungsbeispiel einer erfindungsgemäßen zweistufig aufgeladenen Brennkraftmaschine. Die bevorzugte Anordnung in Figur 5 besteht im wesentlichen aus einer Kombination der unterschiedlichen Ausgestaltungen der Brennkraftmaschinen 1 entsprechend den Figuren 1 bis 4. Der Turbolader 10 ist hier als zweistufig ausgebildeter Turbolader mit variabler Turbinengeometrie ausgebildet. Parallel zu den beiden Turbinen 13, 16 des Turboladers 10 ist ein Vorkatalysator 31 geschaltet. Erfindungsgemäß weist diese Anordnung eine Bypasseinrichtung 40, die ein Rohrleitungsabschnitt 41 mit darin enthaltener Umschalteinrichtung 42 enthält, auf.

An dieser Stelle sei anzumerken, dass in allen Ausführungsbeispielen die Hochdruckturbine 13 oder auch die Niederdruckturbine 16 selbstverständlich auch als sogenannte Zwillingsstromturbinen ausgebildet sein können. Darüber hinaus kann in den Figuren 4 und 5 zusätzlich oder alternativ auch die Niederdruckturbine 16 eine variable Turbinengeometrie aufweisen.

Figur 5 zeigt ferner eine Steuereinrichtung 50. Die Steuereinrichtung 50 ist mit der Umschalteinrichtung 42 und/oder dem Bypassschalter 34 und/oder der Turbine 13 mit variabler Turbinengeometrie über in Figur 5 nicht dargestellte Steuer- bzw. Datenleitungen verbunden. Dadurch sind diese Elemente des Turboladers 10 mit Steuer- bzw. Datensignalen a1, a2, a3 derart beaufschlagbar, dass diese bedarfsgemäß eingestellt werden können. Insbesondere kann dadurch gewährleistet werden, dass bei der Umschalteinrichtung 42 eine genau vorbestimmte Abgasmenge jeweils durch die Turbine 13 strömt bzw. über den Rohrleitungsabschnitt 41 abgezweigt wird. Dieses Einstellen des Durchflusses durch den Rohrleitungsabschnitt 41 bzw. die Turbine 13 ist stufenlos und vorteilhafterweise dynamisch durch die Steuereinrichtung 50 einstellbar. Gleiches gilt selbstverständlich bei der Einstellung der jeweiligen Position der VTG-Turbine 13 sowie des Bypassschalters 34. Auf diese Weise ist es möglich, in Abhängigkeit von der jeweiligen Motorleistung der augenblicklichen Motorbelastung und des Abgasgesamtstromes eine optimale, d.h. möglichst schnelle Aufwärmung der Katalysatoren 30, 31 zu erreichen.

Zusätzlich ist mindestens eine Sensoreinrichtung 52 vorgesehen. Die Sensoreinrichtung 52 ist dazu ausgelegt, die Temperatur b1 des Abgases und/oder die Temperatur b2 mindestens eines Katalysators 30, 31 und/oder die Drehzahl b3 der Brennkraftmaschine 1 und/oder die Drehzahl b4 mindestens einer Turbine 13, 16 und/oder der Drehzahl b5 mindestens eines Verdichters 14, 17 zu erfassen. Diese erfasste Messsignale b1 - b5, die nachfolgend auch als Betriebskenngrößen bezeichnet werden, werden anschließend der Steuereinrichtung 50 zugeführt. Die Steuereinrichtung 50 erzeugt daraus die Regel- bzw. Steuersignale a1 - a3.

Zur Steuerung der Umschalteinrichtung, der Rohrschalter, der Verschlusskörper sowie der in ihrer Geometrie variabel einstellbaren Turbinen in Abhängigkeit von Betriebskenngrößen sind diese an die elektronische Motorsteuerung 50, beispielsweise eine CPU, angeschlossen, die für eine betriebsoptimale Aufteilung des Abgasmassenstromes sorgt. Durch die mögliche Einstellung unterschiedlicher Bypassraten, Durchflussraten und Turbinenstellungen erhält man vorteilhafterweise einen zusätzlichen Freiheitsgrad zur Aufteilung der gesamten Abgasmenge, der im kalten Zustand einerseits einen effektiven Einsatz des Turboladers und andererseits eine hohe Abgasreinigung aufgrund der hohen Effizienz der Katalysatoren ermöglicht.

In einer besonders vorteilhaften Ausgestaltung ist die Bypasseinrichtung 40 samt Rohrleitungsabschnitt 41 und Umschalteinrichtung 42 in dem Gehäuse 51 des Turboladers 10 mitintegriert. In einer besonders vorteilhaften Ausgestaltung der Erfindung ist zusätzlich auch der Vorkatalysator 31 in dem Gehäuse 51 mitintegriert. Dieser Gegenstand ist in allen Figuren 1 bis 5 gestrichelt dargestellt. Durch diese erfindungsgemäße Ausgestaltung ist bei Vorsehen eines im Gehäuse 51 mitintegrierten Vorkatalysators 31 aufgrund der Motornähe eine sehr viel schnellere Aufwärmung des Vorkatalysators 31 und damit einhergehend bereits in kurzer Zeit eine hohe Effizienz der Katalysatoranordnung erreichbar. Darüber hinaus ist durch die Integration zumindest eines Teil des Rohrleitungsabschnitte 41 in das Gehäuse 51 eine sehr viel einfachere Montage möglich, wodurch diese Gesamtanordnung insgesamt kostenattraktiver wird.

In den vorstehenden Ausführungsbeispielen weist die Niederdruckstufe einen gegenüber der Hochdruckstufe größeren Durchmesser der entsprechenden Turbinenräder auf.

In den vorstehenden Ausführungsbeispielen wurde jeweils eine Steuerung des Umschalters für die Bypassleitung sowie der Turbinengeometrie durch die Motorsteuerung beschrieben. Selbstverständlich lassen sich einige oder alle diese Elemente auch anderweitig steuern oder durch eine eigens vorgesehene Regeleinrichtung an den gewünschten Betriebszustand anpassen. Die Einstellung kann dabei elektrisch, pneumatisch, hydraulisch, mechanisch oder dergleichen erfolgen.

Die Erfindung sei selbstverständlich nicht ausschließlich auf zweistufig ausgebildete Turbolader beschränkt, sondern lässt sich vielmehr auch auf einstufig ausgebildete oder drei- oder mehrstufig ausgebildete Turbolader erweitern.

Schließlich sei die Erfindung nicht ausschließlich auf Diesel-Brennkraftmaschinen in Vierzylinder-Reihenbauweise beschränkt, sondern lässt sich auf beliebige Brennkraftmaschinen mit einer beliebigen Anzahl von wie auch immer angeordneten Zylindern erweitern.

Zusammenfassend kann festgestellt werden, dass durch den wie beschrieben ausgestalteten Turbolader mit stufenloser Umschaltung zwischen Normalbetrieb und Bypassbetrieb, bei dem die Bypassleitung vorteilhafterweise im Gehäuse des Turboladers mitintegriert ist, auf einfache jedoch nichts desto trotz sehr effektive Weise ein höherer Wirkungsgrad des Katalysators erzielbar ist, ohne dass eine konstruktiv aufwendige, teure Lösung gemäß dem Stand der Technik vorgenommen werden muss.

Die vorliegende Erfindung wurde anhand der vorstehenden Beschreibung so dargestellt, um das Prinzip der Erfindung und dessen praktische Anwendung bestmöglichst zu erklären, jedoch lässt sich die Erfindung bei geeigneter Abwandlung selbstverständlich in mannigfaltigen anderen Ausführungsformen realisieren.

### Bezugszeichenliste

- 1: Brennkraftmaschine
- 2: Zylinder
- 3: Ladeluftseite
- 4: Abgasseite
- 5: Ladeluftsammelleitung
- 6: Abgassammelleitung
- 7: Einlässe
- 8: Auslässe

- 10: Turbolader
- 11: Hochdruckstufe
- 12: Niederdruckstufe
- 13: (Hochdruck-)Turbine
- 14: (Hochdruck-)Verdichter
- 15: Welle
- 16: Niederdruckturbine
- 17: Niederdruckverdichter
- 18: Welle

- 20, 21, 22: Abgasleitungen
- 23, 24, 25: Ladeluftleitungen
- 26: Ladeluftkühler

- 30: Katalysator
- 31: Vorkatalysator
- 33: Bypassleitungen
- 34: Bypassventile, Rohrschalter

- 40: Bypasseinrichtung
- 41: Rohrleitungsabschnitt
- 42: Umschalteinrichtung
- 43: Abzweigung
- 44: Einmündung

- 50: Steuereinrichtung
- 51: Gehäuse
- 52: Sensoreinrichtung

- a1 - a3: Steuer-/Datensignale
- b1 - b5: Betriebskenngrößen

## Patentansprüche

1. Aufladesystem (10) für eine Brennkraftmaschine (1)
mit mindestens einer abgasseitig angeordneten Turbine (13, 16) und mit mindestens einem ladeluftseitig angeordneten Verdichter (14, 17), die jeweils über eine gemeinsame Welle (15, 18) gekoppelt sind,
mit mindestens einem ersten Katalysator (30), der abgasseitig der Turbine (13, 16) in Reihe nachgeschaltet vorgesehen ist,
mit einer Vorrichtung (40) zum schnellen Aufheizen des ersten Katalysators (30) bei niedrigen Temperaturen der Brennkraftmaschine (1),
die eine parallel zu mindestens einer Turbine (13, 16) angeordnete Rohrleitung (41) zur Überbrückung der jeweiligen Turbine (13, 16) aufweist und
die eine Schaltvorrichtung (42) aufweist, die abgasseitig der parallelen Anordnung aus Rohrleitung (41) und Turbine (13, 16) in Reihe vorgeschaltet vorgesehen ist und über die einstellbar ist, welche Teilmenge des Abgases jeweils über die Turbine (13, 16) und welche Teilmenge jeweils über die Rohrleitung (41) dem ersten Katalysator (30) direkt zugeführt wird.

2. Aufladesystem nach Anspruch 1,
**dadurch gekennzeichnet,**
**dass** die Vorrichtung (40) in einem Gehäuse (51) der Turbine (13, 16) und/oder des gesamten Aufladesystems (10) mitintegriert ist.

3. Aufladesystem nach einem der vorstehenden Ansprüche,
**dadurch gekennzeichnet,**
**dass** mindestens eine der Turbinen (13, 16) als Turbine mit variabler Turbinengeometrie ausgebildet ist.

4. Aufladesystem nach einem der vorstehenden Ansprüche,
**dadurch gekennzeichnet,**
**dass** ein zweiter Katalysator (31) vorgesehen ist, der in der Rohrleitung (41) angeordnet ist.

5. Aufladesystem nach Anspruch 4,
**dadurch gekennzeichnet,**
**dass** der zweite Katalysator (31) kleiner ausgebildet ist als der erste Katalysator (30) und dem ersten Katalysator (30) vorgeschaltet angeordnet ist.

6. Aufladesystem nach einem der Ansprüche 4 oder 5,
**dadurch gekennzeichnet,**
**dass** der zweite Katalysator (31) in einem Gehäuse (51) der Turbine (13, 16) und/oder des gesamten Aufladesystems (10) mitintegriert ist.

7. Aufladesystem nach einem der vorstehenden Ansprüche,
**dadurch gekennzeichnet,**
**dass** das Aufladesystem (10) als zweistufiger Turbolader (10) ausgebildet ist,
- mit mindestens einer Hochdruckstufe (11), die jeweils eine Hochdruckturbine (13) und jeweils einen Hochdruckverdichter (14), die über eine erste gemeinsame Welle (15) miteinander gekoppelt sind, aufweist, und
- mit mindesten einer der Hochdruckstufe (11) nachgeschalteten Niederdruckstufe (12), die jeweils eine Niederdruckturbine (16) und jeweils einen Niederdruckverdichter (17), die über eine zweite gemeinsame Welle (18) miteinander gekoppelt sind, aufweist.

8. Aufladesystem nach einem der vorstehenden Ansprüche,
**dadurch gekennzeichnet,**
**dass** eine Steuereinrichtung (50) zur Steuerung der Schaltvorrichtung (42) vorgesehen ist.

9. Aufladesystem nach einem der vorstehenden Ansprüche,
**dadurch gekennzeichnet,**
**dass** mindestens eine Sensoreinrichtung (52) vorgesehen ist, welche zum Erfassen der Temperatur des Abgases und/oder der Temperatur mindestens eines Katalysators (30, 31) und/oder der Drehzahl der Brennkraftmaschine (1) und/oder der Drehzahl mindestens einer Turbine (13, 16) und/oder der Drehzahl mindestens eines Verdichters (14, 17) vorgesehen ist.

10. Aufladesystem nach Anspruch 9,
**dadurch gekennzeichnet,**
**dass** die Schaltvorrichtung (42) steuerbar oder regelbar ausgebildet ist, wobei als Steuergröße bzw. Regelgröße (a1 - a3) ein von der Sensoreinrichtung (52) erfasstes oder davon abgeleitetes Signal vorgesehen ist.

11. Aufladesystem nach einem der Ansprüche 9 oder 10,
**dadurch gekennzeichnet,**
**dass** die Steuergröße bzw. Regelgröße (a1 - a3) ein elektrisches, pneumatisches, mechanisches oder hydraulisches Signal ist.

12. Aufladesystem nach einem der vorstehenden Ansprüche,
**dadurch gekennzeichnet,**
**dass** die Schaltvorrichtung (42) als Umschaltvorrichtung ausgebildet ist, die das Abgas der Brennkraftmaschine (1) entweder über mindestens eine Turbine (13, 16) oder über die Rohrleitung (41) leitet.

13. Aufladesystem nach Anspruch 12,
**dadurch gekennzeichnet,**
**dass** die Schaltvorrichtung (42) als Schieber und/oder als Klappe und/oder als Drosselventil und/oder als Rohrschalter ausgebildet.

14. Aufladesystem nach einem der Ansprüche 8 bis 13,
**dadurch gekennzeichnet,**
**dass** die Steuereinrichtung (50) die Schaltvorrichtung (42) dynamisch in Abhängigkeit der Steuergröße und/oder der Regelgröße (a1 - a3) steuert.

15. Brennkraftmaschine (1)
mit einem Motorblock, der mindestens einen Zylinder (2) aufweist, mit mindestens einem Ladelufteinlass (5, 7) und mit mindestens einem Abgasauslass (6, 8),
mit einem Aufladesystem (10) nach einem der vorstehenden Ansprüche, dessen Turbinen (13, 16) dem Abgasauslass (6, 8) nachgeschaltet angeordnet sind und dessen Verdichter (14, 17) dem Ladelufteinlass (5, 7) vorgeschaltet angeordnet sind.

16. Brennkraftmaschine nach Anspruch 15,
**dadurch gekennzeichnet,**
**dass** das Aufladesystem (10) mindestens einen Turbolader (10) aufweist.

17. Brennkraftmaschine nach einem der Ansprüche 15 oder 16,
**dadurch gekennzeichnet,**
**dass** die Brennkraftmaschine (1) als Otto-Motor oder als Diesel-Motor ausgebildet ist.
